# EUROPEAN PATENT APPLICATION

(11) **EP 1 428 622 A1**
(43) Date of publication of application: **16.06.2004**
(21) Application number: 03028554.8
(22) Date of filing: 11.12.2003
(51) Int. Cl.: B23Q 11/00, B23Q 17/24

(54) **Hose with optical device**

(30) Priority: 11.12.2002 US 316798
(71) Applicant: Techtronic Industries Co., Ltd., Tsuen Wan, N.T. Hong Kong (CN)
(72) Inventor: Whiffen, Bryan, Scott, Anderson South Carolina 29621 (US)
(74) Representative: HOFFMANN - EITLE

(57) **Abstract**

A work tool is provided that includes a housing (18). A blower (12) provides one of a positive or negative pressure and is connected to the housing (18). A hose (4) has a first end connected with the blower and an opposite second end (16). An optical device (2) for illuminating a work area is positioned at least partially within the second end (16) of the hose (4).

## Description

The present invention relates to a hose for removing debris from a work area and in particular to a hose with an optical device for illuminating a work area and removing debris.

### BACKGROUND

When using a tool to work on a workpiece, it is not uncommon for chips, dust, or other debris to collect around the work area where the tool is in use. For example, when a table saw is used to saw a piece of wood, it is not uncommon for the debris resulting from the cut wood to collect on a work table associated with the table saw. This may restrict the view of the workpiece and work area and may soil the workpiece and/or the tool.

It is therefore desirable to remove the resulting debris from the work area. Often, a separate vacuum or blower device is used to remove the debris. This, however, requires an additional piece of equipment. In addition, this may require the complete stoppage of work in order to use the vacuum or blower device.

It is also desirable to have a clear view of the workpiece and the resulting debris so that the debris may be thoroughly cleared away. Often, the equipment associated with the tool itself may reduce the amount of light available in the general work area. One way to deal with this problem is described in U.S. No. 6,012,373 to Brickner, Jr. et al. This patent describes the use of a light assembly and air nozzle for use with a scroll saw. This configuration, however, has several drawbacks. First, the light assembly contemplated by the Brickner, Jr. et al. patent is large and cumbersome, and may actually hinder a user's view at certain positions. Thus, a user has to take care in positioning the light assembly. In addition, the air nozzle and light assembly are separate devices, thus requiring several pieces to be present in the work area associated with the tool, again requiring the careful positioning of several pieces so that the view of the work area is not hindered.

Accordingly, it is desirable to have a device that overcomes the disadvantages and limitations described above.

### SUMMARY

According to one aspect of the invention, a work tool is provided that includes a housing. A blower provides one of a positive or negative pressure and is connected to the housing. A hose has a first end connected with the blower and an opposite second end. An optical device for illuminating a work area is positioned at least partially within the second end of the housing.

Another aspect of the invention includes a second housing attached to the first housing. The second housing includes a blower that provides a negative pressure. A flexible hose has a first end connected with the blower and an opposite second end. An optical device for illuminating a work area is positioned at least partially within the second end of the housing.

Another aspect of the invention includes a method for illuminating and cleaning a work area associated with a work tool. The work tool includes a housing, a hose, and an optical device located at least partially within the hose. The method includes actuating the work tool and directing the hose about the work area. The hose provides one of a positive or negative pressure.

For purposes of simplicity and convenience, the tool of the present invention will be described as a table saw. One skilled in the art, however, will readily understand that the use of the term table saw does not limit the scope of the present invention.

### BRIEF DESCRIPTION OF THE DRAWINGS

FIG. 1 is a perspective view of an embodiment of the hose with an optical device according to the present invention and incorporated into a table saw.

FIG. 2 is a side plan view of the embodiment of FIG. 1, with a portion of the housing removed.

FIG. 3 is a front plan view of the optical device positioned within the hose.

FIG. 4 is a side plan view of an alternate embodiment showing the blower separate from the table saw, with a portion of the second housing removed.

### DESCRIPTION OF THE INVENTION

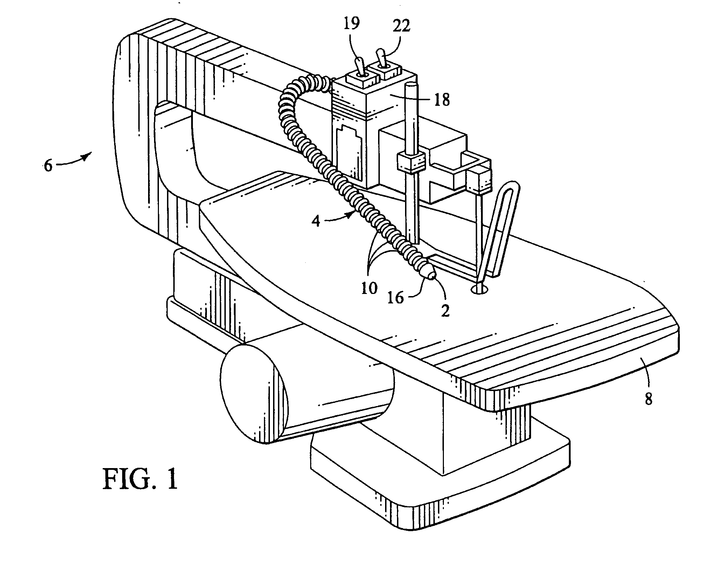

Turning now to FIG. 1, an optical device 2 at least partially located within a hose 4 is shown. The hose 4 is connected with a table saw 6. The tooling associated with the table saw 6 is conventional. Although the description provided herein contemplates the hose 4 being used in conjunction with a table saw 6, those skilled in the art will readily recognize that the hose may be used with a variety of tools that may generate debris or shavings, such as metal or wood chips or dust, for example. Examples of other tools include, but are not limited to, miter saws, milling machines, various types of drills and drill presses, or any other type of tool where the use of the tool may generate debris in the general work area of the tool.

The hose 4 is a flexible tube made from PVC, although other suitable materials may be used. Other suitable materials include but are not limited to plastics, rubbers, and lower-strength flexible metals. It is preferable that the hose is flexible so that it may be manipulated about the area of a work table 8 (FIG. 1) or other type of work area. To provide further flexibility, the hose 4 may also include a variety of segments 10, thus allowing the hose to be easily manipulated at sharp angles. Although a flexible hose is contemplated, the hose may be made from more rigid materials.

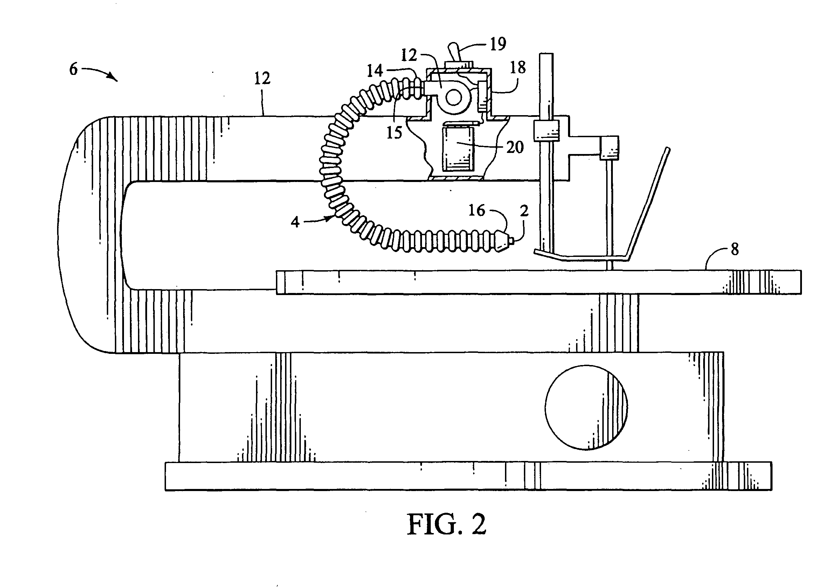

Referring to FIG. 2, the table saw 6 includes a blower 12. A first end 14 of the hose 4 is connected to an outlet 15 of the blower 12. The blower 12 is housed within a housing 18 and is electrically connected with the table saw. In additional embodiments, a switch 19 may be provided so that the blower may be actuated separately from the table saw. In a preferred embodiment, the blower 12 provides a positive pressure so that a gas such as air is expelled from a second end 16 of the hose 4. The blower is conventional, and the amount of pressure provided depends upon manufacturing preferences, and in some embodiments may be variable. Thus, the hose clears or "blows" the debris away from the work table.

The second end 16 of the hose is opposite the first end 14 and includes an optical device 2. The optical device 2 provides illumination as the hose 4 is manipulated about the work table 8. The optical device 2 preferably is an LED, although other illuminating devices may also be used. Other suitable devices include but are not limited to incandescent, halogen, fluorescent, or tungsten illuminating devices. Preferably, the optical device 2 is connected to an electrical device that can be a battery 20 housed within the housing 18, and may be actuated through the use of a switch 22. Note that in other embodiments, the optical device may be electrically connected with the table saw so that it is actuated along with, rather than separately from, the table saw.

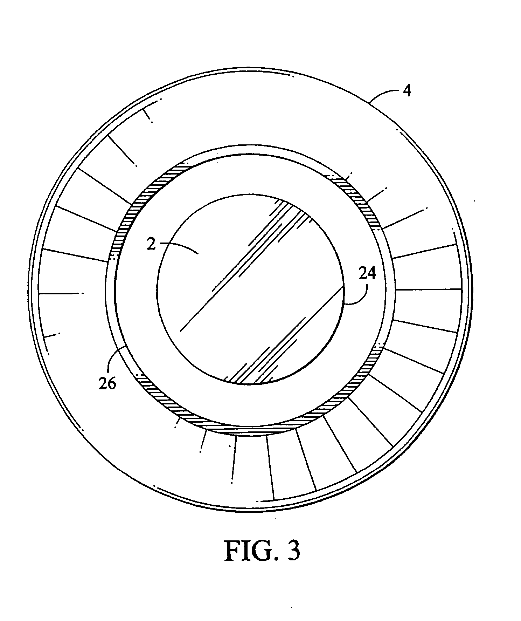

The optical device 2 is positioned within the hose 4 so that it protrudes at least partially from the second end 16 of the hose. As shown in FIG. 3, the optical device 2 should be sized so that its circumference 24 at its widest part is less than the inner circumference 26 of the second end 16 of the hose. Sizing the optical device 2 in this way thus allows the positive pressure to be freely expelled from the second end 16 of the hose 4.

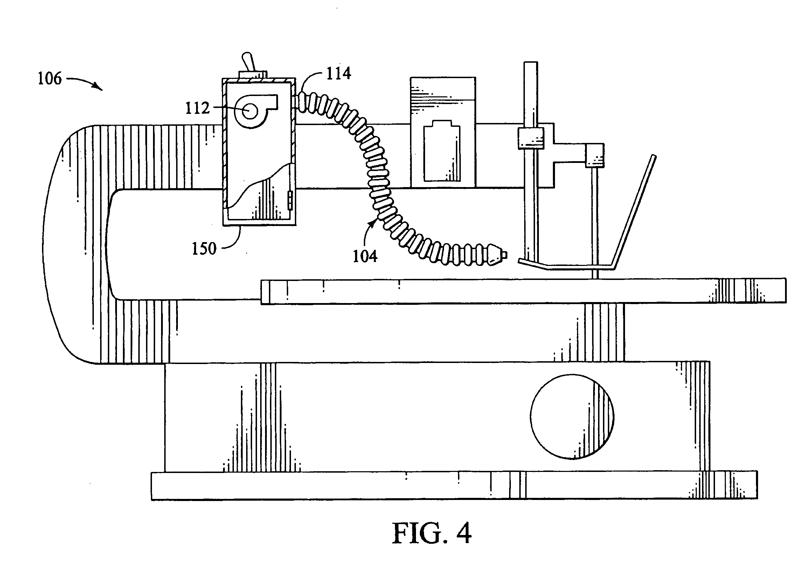

In an alternate embodiment, and as shown in FIG. 4, a blower 112 may provide a negative, or vacuum, pressure so that the debris is vacuumed up by the hose 104. As those skilled in the art will recognize, in addition to being connected with the blower 112, the first end 114 of the hose also provides an egress for collected debris. Because of the need for an egress for the debris, the blower may be within a second housing 150 so that the debris may be collected. The blower, however, may be electrically connected with the table saw in the manner described above. The interface between the optical device 2 and the hose 4 will be as described above.

To clean a work area associated with a tool, a user simply grasps the hose and manipulates it about portions of the work area that the user desires to clean. Depending on whether a positive or negative pressure is expelled from the hose 4, debris will either be blown or vacuumed from the work area. If the hose 4 is actuated via a switch, the switch will need to be actuated. As noted above, the work area may also be illuminated via the optical device 2. To illuminate the work area, the switch associated with the optical device is actuated. A user then simply directs the hose 4 about the work area to the portions of the work area the user desires to illuminate.

Thus, an optical device 2 positioned at least partially within a hose 4 and its method of use have been described herein. The optical device 2 provides the benefit of illuminating the work table so that the work table may be thoroughly cleared. Moreover, the optical device 2 provides the additional benefit of illuminating the area where the tool works upon a workpiece. When used with a flexible hose 4, the optical device 2 may be positioned so that it provides optimum illumination to a user working with the tool. While the above description constitutes the preferred embodiments of the present invention, it will be appreciated that the invention is susceptible of modification, variation, and change without departing from the proper scope and fair meaning of the accompanying claims.

## Claims

1. A work tool comprising:
a housing;
a blower providing one of a positive or negative pressure connected to the housing;
a hose having a first end connected with the blower and an opposite second end; and
an optical device positioned at least partially within the second end of the housing for illuminating a work area.

2. The work tool of claim 1, wherein the hose is made from a flexible material.

3. The work tool of claim 2, wherein the hose further comprises a plurality of segments.

4. The work tool of claim 1, further comprising a battery and a switch associated with the housing, wherein the optical device is electrically connected with the battery and may be actuated with the switch.

5. The work tool of claim 1, wherein the optical device is an LED.

6. The work tool of claim 1, wherein a widest circumference of the optical device is less than an inner circumference of the second end.

7. The work tool of claim 1 further comprising a switch electrically connected with the blower.

8. A work tool comprising:
a first housing;
a second housing attached to the first housing, the second housing having a blower providing a negative pressure;
a flexible hose having a first end connected with the blower and an opposite second end; and
an optical device for illuminating a work area positioned at least partially within the second end of the housing.

9. The work tool of claim 8, wherein the hose further comprises a plurality of segments.

10. The work tool of claim 8, further comprising a battery and a switch associated with the first housing and electrically connected with the optical device.

11. The work tool of claim 8, wherein the optical device is an LED.

12. The work tool of claim 8, wherein a widest circumference of the optical device is less than an inner circumference of the hose.

13. The work tool of claim 8 further comprising a switch electrically connected with the blower.

14. A method for illuminating and cleaning a work area associated with a work tool, the work tool including a housing, a hose, and an optical device located at least partially within the hose, the method comprising:
actuating the work tool; and
directing the hose about the work area, the hose providing one of a positive or negative pressure.

15. The method of claim 14 further comprising actuating a blower associated with the housing.

16. The method of claim 14 further comprising actuating the optical device.
